# EUROPEAN PATENT APPLICATION

(11) **EP 4 819 689 A1**
(43) Date of publication of application: **07.10.2026**
(21) Application number: 26150922.8
(22) Date of filing: 08.01.2026
(51) Int. Cl.: H04W 36/32, H04W 84/06, H04W 36/00, H04W 36/36, H04W 36/14, H04W 36/30

(54) **NETWORK HANDOVER METHOD AND APPARATUS, DEVICE, STORAGE MEDIUM AND PROGRAM PRODUCT**

(30) Priority: 03.04.2025 CN 202510420171
(71) Applicant: Ecarx (Hubei) Tech Co., Ltd., Wuhan, Hubei 430056 (CN)
(72) Inventor: QIAN, Yongbo, Wuhan, Hubei 430056 (CN); SHAO, Tiecheng, Wuhan, Hubei 430056 (CN)
(74) Representative: Bandpay & Greuter

(57) **Abstract**

Embodiments of the present application provide a network handover method, a network handover apparatus, a device, a storage medium and a program product. The method includes: a terminal device performing real-time monitoring on a network of a current serving cell; constructing an available cell list according to a database cell table that is updated in real time when it is determined that signal quality data of the current serving cell is lower than a first preset threshold and a duration corresponding to the signal quality data being lower than the first preset threshold exceeds a first preset time; measuring, based on a preset measurement strategy, signal quality of a cell in the available cell list to determine a target cell. When the target cell is a cellular cell, the network is switched to a cellular network corresponding to the cellular cell, and when the target cell is a satellite cell, the network is switched to a non-terrestrial network corresponding to the satellite cell. The method improves the stability and the reliability of the terminal device's network switching, achieves fast and smooth cell network switching, and enhances the service continuity and the service stability of the terminal.

## Description

### TECHNICAL FIELD

The present application relates to the technical field of communication network, and in particular, to a network handover method, a network handover apparatus, a device, a storage medium and a program product.

### BACKGROUND

With the development of technologies, when a terrestrial network coverage is insufficient or a terrestrial network is unavailable, a terminal device needs to perform a cell change in a mobile communication network to maintain communication continuity and communication service quality.

In the prior art, a network side acquires historically registered cell information and pre-configured cell information (e.g., cell ID and signal quality) of the terminal device, selects an optimal cell according to a current location of the terminal device, generates and delivers a handover instruction to the terminal device, to control the terminal device to perform the cell change.

However, the historically registered cell information and the pre-configured cell information often differs from the actual network condition of the cell, this reduces the accuracy of the optimal cell determination by the network side, and further reduces the service stability and the service continuity of the terminal device after the terminal device's cell change controlled by the network side.

### SUMMARY

Embodiments of the present application provide a network handover method, a network handover apparatus, a device, a storage medium and a program product, so as to improve the stability and the reliability during a network handover process of a terminal device, thereby achieving an effect of fast and smooth cell switching, and enhancing the service continuity and the service stability of the terminal device.

In a first aspect, an embodiment of the present application provides a network handover method, applied to a terminal device, including:
performing a network registration based on a power-on instruction, and performing real-time monitoring on a network of a current serving cell to obtain signal quality data of the current serving cell and a duration corresponding to the signal quality data of the current serving cell;
determining whether the current serving cell meets a preset change condition, and constructing an available cell list when determining that the current serving cell meets the preset change condition, where the preset change condition refers to that the signal quality data is lower than a first preset threshold and the duration corresponding to the signal quality data being lower than the first preset threshold exceeds a first preset time;
measuring, based on a preset measurement strategy, a signal quality of a cell in the available cell list to determine a target cell; and performing a network handover based on the target cell, where when the target cell is a cellular cell, the network is switched to a cellular network corresponding to the cellular cell, and when the target cell is a satellite cell, the network is switched to a non-terrestrial network corresponding to the satellite cell.

Optionally, the constructing the available cell list specifically includes:
acquiring current location information, determining a public land mobile network identifier corresponding to the location information based on a database cell table that is updated in real time, and determining corresponding available cellular cell information based on the public land mobile network identifier, where the database cell table is constructed and updated by the terminal device;
determining a target overpassing satellite identification, ID, based on the location information, and determining satellite cell information corresponding to the target overpassing satellite ID based on the database cell table to obtain available satellite cell information;
generating the available cell list according to the available cellular cell information and the available satellite cell information.

Optionally, before generating the available cell list, the method further includes:
when real-time system information is received, generating the available cell list according to the system information, the available cellular cell information, and the available satellite cell information.

Optionally, the construction and update of the database cell table includes:
acquiring preset configuration information, and generating the database cell table according to the preset configuration information, where the preset configuration information includes historical registered cell information, cellular operation network information, and non-terrestrial operation network information;
based on the registered network, receiving system information of the current serving cell delivered by a network side in real time to obtain serving cell information and neighbor cell information at a current moment; and updating the database cell table according to the serving cell information and the neighbor cell information.

Optionally, after generating the database cell table, the method further includes:
when an instruction to enter a C-V2X service scenario is received, acquiring terminal sharing information within a preset range based on the current location information, where the terminal sharing information includes cell information shared by a plurality of adjacent terminal devices within the preset range;
updating the database cell table according to the terminal sharing information.

Optionally, after generating the database cell table, the method further includes:
when over-the-air technology, OTA, information pushed by a cloud database is received, updating the database cell table based on the OTA information.

Optionally, the determining the target overpassing satellite ID based on the location information specifically includes:
acquiring current time information and current ephemeris data; performing an ephemeris calculation on the location information, the time information, and the ephemeris data to obtain an ephemeris calculation result and storing the ephemeris calculation result, where the location information includes altitude information, longitude information and latitude information, and the ephemeris calculation result includes a satellite ID and running trajectory data corresponding to each satellite;
performing an ephemeris estimation on the ephemeris calculation result to obtain an ephemeris estimation result and storing the ephemeris estimation result, where the ephemeris estimation result includes a satellite ID, an arrival time, and a departure time corresponding to each satellite;
determining a surrounding satellite ID corresponding to the location information according to the running trajectory data corresponding to each satellite in the ephemeris calculation result; obtaining an arrival time and a departure time corresponding to the surrounding satellite ID based on the ephemeris estimation result, and determining the target overpassing satellite ID corresponding to the terminal device.

Optionally, after generating the database cell table, the method further includes:
updating the non-terrestrial operation network information in the database cell table according to the ephemeris calculation result and the ephemeris estimation result.

Optionally, when the preset measurement strategy is a sequential measurement strategy, performing a polling measurement on a cell in the available cell list; obtaining signal quality data of a cell and a duration corresponding to the signal quality data of the cell for each measurement, and determining whether a signal quality of the cell meets a preset communication condition, where the preset communication condition refers to that the signal quality data is higher than a second preset threshold and the duration corresponding to the signal quality data being higher than the second preset threshold exceeds a second preset time;
determining a first cell whose signal quality meets the preset communication condition obtained through the polling measurement as the target cell;
when no cell in the available cell list has a signal quality that meets the preset communication condition through the polling measurement, continuing to monitor the signal quality data of the current serving cell.

Optionally, when the preset measurement strategy is a full measurement strategy, measuring a signal quality of each cell in the available cell list to obtain signal quality data and a duration corresponding to each cell in the available cell list;
determining whether a signal quality of a corresponding cell meets a preset communication condition according to the signal quality data and the duration corresponding to each cell, and sorting cells that meet the preset communication condition to obtain a sorting result; and determining the target cell according to the sorting result.

In a second aspect, an embodiment of the present application provides a network handover apparatus, applied to a terminal device, including:
an acquiring module, configured to perform a network registration based on a power-on instruction, and perform real-time monitoring on a network of a current serving cell to obtain signal quality data of the current serving cell and a duration corresponding to the signal quality data of the current serving cell;
a processing module, configured to determine whether the current serving cell meets a preset change condition, and construct an available cell list when determining that the current serving cell meets the preset change condition, where the preset change condition refers to that the signal quality data is lower than a first preset threshold and the duration corresponding to the signal quality data being lower than the first preset threshold exceeds a first preset time;
the processing module is further configured to measure, based on a preset measurement strategy, a signal quality of a cell in the available cell list to determine a target cell; and perform a network handover based on the target cell, where when the target cell is a cellular cell, the network is switched to a cellular network corresponding to the cellular cell, and when the target cell is a satellite cell, the network is switched to a non-terrestrial network corresponding to the satellite cell.

Optionally, the processing module is further configured to:
acquire current location information, determine a public land mobile network identifier corresponding to the location information based on a database cell table that is updated in real time, and determine corresponding available cellular cell information based on the public land mobile network identifier, where the database cell table is constructed and updated by the terminal device;
determine a target overpassing satellite identification (ID) based on the location information, and determine satellite cell information corresponding to the target overpassing satellite ID based on the database cell table to obtain available satellite cell information;
generate the available cell list according to the available cellular cell information and the available satellite cell information.

Optionally, the processing module is further configured to: before the available cell list is generated, when real-time system information is received, generate the available cell list according to the system information, the available cellular cell information, and the available satellite cell information.

Optionally, the processing module is further configured to: acquire preset configuration information, and generate the database cell table according to the preset configuration information, where the preset configuration information includes historical registered cell information, cellular operation network information, and non-terrestrial operation network information;
based on the registered network, receive system information of the current serving cell delivered by a network side in real time to obtain serving cell information and neighbor cell information at a current moment; and update the database cell table according to the serving cell information and the neighbor cell information.

Optionally, the processing module is further configured to: after the database cell table is generated, when an instruction to enter a C-V2X service scenario is received, acquire terminal sharing information within a preset range based on the current location information, where the terminal sharing information includes cell information shared by a plurality of adjacent terminal devices within the preset range;
update the database cell table according to the terminal sharing information.

Optionally, the processing module is further configured to: after the database cell table is generated, when over-the-air technology (OTA) information pushed by a cloud database is received, update the database cell table based on the OTA information.

Optionally, the processing module is further configured to: acquire current time information and current ephemeris data; perform an ephemeris calculation on the location information, the time information, and the ephemeris data to obtain an ephemeris calculation result and store the ephemeris calculation result, where the location information includes altitude information, longitude information and latitude information, and the ephemeris calculation result includes a satellite ID and running trajectory data corresponding to each satellite;
perform an ephemeris estimation on the ephemeris calculation result to obtain an ephemeris estimation result and store the ephemeris estimation result, where the ephemeris estimation result includes a satellite ID, an arrival time, and a departure time corresponding to each satellite;
determine a surrounding satellite ID corresponding to the location information according to the running trajectory data corresponding to each satellite in the ephemeris calculation result; obtain an arrival time and a departure time corresponding to the surrounding satellite ID based on the ephemeris estimation result, and determine the target overpassing satellite ID corresponding to the terminal device.

Optionally, the processing module is further configured to: after the database cell table is generated, update the non-terrestrial operation network information in the database cell table according to the ephemeris calculation result and the ephemeris estimation result.

Optionally, the processing module is further configured to: when the preset measurement strategy is a sequential measurement strategy, perform a polling measurement on a cell in the available cell list; obtain signal quality data of a cell and a duration corresponding to the signal quality data of the cell for each measurement, and determine whether a signal quality of the cell meets a preset communication condition, where the preset communication condition refers to that the signal quality data is higher than a second preset threshold and the duration corresponding to the signal quality data being higher than the second preset threshold exceeds a second preset time;
determine a first cell whose signal quality meets the preset communication condition obtained through the polling measurement as the target cell;
when no cell in the available cell list has a signal quality that meets the preset communication condition through the polling measurement, continue to monitor the signal quality data of the current serving cell.

Optionally, the processing module is further configured to: when the preset measurement strategy is a full measurement strategy, measure a signal quality of each cell in the available cell list to obtain signal quality data and a duration corresponding to each cell in the available cell list;
determine whether a signal quality of a corresponding cell meets a preset communication condition according to the signal quality data and the duration corresponding to each cell, and sort cells that meet the preset communication condition to obtain a sorting result; and determine the target cell according to the sorting result.

In a third aspect, an embodiment of the present application provides an electronic device, including: a memory and a processor;
the memory is stored with computer-executable instructions;
the processor executes the computer-executable instructions stored in the memory, and the processor is caused to execute the implementation according to the first aspect and/or various possible implementations according to the first aspect as described above.

In a fourth aspect, an embodiment of the present application provides a computer-readable storage medium, the computer-readable storage medium is stored with computer-executable instructions, and the computer-executable instructions, when being executed by a processor, are used to implement the implementation according to the first aspect and/or various possible implementations according to the first aspect as described above.

In a fifth aspect, an embodiment of the present application provides a computer program product, including a computer program, and when the computer program is executed by a processor, the implementation according to the first aspect and/or various possible implementations according to the first aspect as described above is implemented.

In the network handover method, the network handover apparatus, the device, the storage medium and the program product provided by the embodiments of the present application, the terminal device performs a network registration after power-on, and monitors a network condition of a current serving cell to which it is registered to obtain signal quality data of the current serving cell and a duration corresponding to the signal quality data of the current serving cell. When it is determined that the signal quality data is lower than a first preset threshold and the duration corresponding to the signal quality data being lower than the first preset threshold exceeds a first preset time, the available cell list is constructed based on the database cell table that is updated in real time. The database cell table that is updated in real time is obtained through dynamic updates based on system information delivered in real time by the network side, terminal sharing information, and OTA information pushed by the cloud, thereby providing a reliable data basis for the construction of the available cell list. After obtaining the available cell list, signal quality of the cell(s) in the available cell list is measured based on a preset measurement strategy, thereby determining a target cell. Thus, when the target cell is a cellular cell, the network is switched to a cellular network corresponding to the cellular cell, and when the target cell is a satellite cell, the network is switched to a non-terrestrial network corresponding to the satellite cell. The present application improves the stability and the reliability of the terminal device's network switching, achieves fast and smooth cell change, and enhances the service continuity and the service stability of the terminal device.

### BRIEF DESCRIPTION OF DRAWINGS

The drawings herein are incorporated into the specification and form a part of the specification. The drawings illustrate embodiments consistent with the present application, and are used to explain principles of the present application together with the specification.
FIG. 1 is a schematic diagram of an application scenario of a network handover method provided by the present application.
FIG. 2 is a first flowchart of a network handover method provided by the present application.
FIG. 3 is a flowchart of constructing an available cell list provided by the present application.
FIG. 4 is a flowchart of constructing a database cell table provided by the present application.
FIG. 5 is a structural diagram of a database cell table provided by the present application.
FIG. 6 is a flowchart of calculating a target overpassing satellite ID provided by the present application.
FIG. 7 is a second flowchart of a network handover method provided by the present application.
FIG. 8 is a third flowchart of a network handover method provided by the present application.
FIG. 9 is a structural diagram of a network handover apparatus provided by the present application.
FIG. 10 is a structural diagram of an electronic device provided by the present application.

Through the above drawings, explicit embodiments of the present application have been shown, which will be described in more detail later. These drawings and text description are not intended to limit the scope of the concept of the present application in any way, but to explain the concept of the present application to those skilled in the art by referring to specific embodiments.

### DESCRIPTION OF EMBODIMENTS

Exemplary embodiments will be described in detail here, examples of which are illustrated in accompanying drawings. When the following description involves the drawings, unless otherwise indicated, the same reference sign in different drawings represents the same or similar elements. The implementations described in the following exemplary embodiments do not represent all implementations consistent with the present application. On the contrary, they are merely examples of apparatuses and methods consistent with some aspects of the present application as detailed in the appended claims.

It should be noted that, both user information (including but not limited to information about a user device, personal information about a user, etc.) and data (including but not limited to data used for analysis, stored data, displayed data, etc.) involved in the present application are information and data that have been authorized by the user or fully authorized by all parties. The processing of related data, such as collection, storage, use, procession, transmission, provision, disclosure, and application, complies with relevant laws, regulations, and standards in relevant regions. It takes necessary confidentiality measures, and does not violate public policy, and a corresponding operation entry is provided for users to choose to authorization or refusal.

First, terms involved in the present application will be explained.

C-V2X (Cellular Vehicle-to-Everything) refers to a communication system based on cellular network technology, and aims at supporting communication between vehicles and the surrounding environment.

Cellular cell refers to a basic unit in a cellular communication system, which is a geographical area covered by a base station. In a cellular network, an entire service area is divided into multiple cells, and each cell is served by a base station that provides radio coverage and communication services.

Satellite cell refers to a geographical area covered by a satellite communication system. Unlike a traditional terrestrial cellular cell, a satellite cell uses a satellite as the base station to provide wide-area radio communication coverage. A satellite base station refers to a communication device hosted on a satellite, which is responsible for wireless communication with a terrestrial terminal (such as a satellite phone, a satellite communication module, etc.).

Cell change refers to a switch between different cells for a mobile device, to maintain network connectivity and service quality, thereby ensuring that communication is not interrupted through the cell change during a movement of a user terminal.

NTN (Non-Terrestrial Network) refers to a non-terrestrial network that uses a non-terrestrial communication infrastructure, such as a satellite, a high-altitude platform (such as a drone, a stratospheric balloon, etc.), to achieve global communication coverage.

Cellular network refers to a wireless communication network based on a terrestrial base station, and is usually composed of multiple cells. Each cell is served by a base station that provides coverage. Among them, a PLMN can be composed of multiple types of cellular technologies.

NR (New Radio) refers to 5G wireless access technology that delivers high data rates, low latency, and massive device connectivity.

PLMN (Public Land Mobile Network) refers to a public land mobile network, and consists of multiple kinds of cellular technologies.

RSRP (Reference Signal Received Power) refers to an average power of a reference signal received by the terminal in LTE and 5G networks. It is a key indicator for determining a signal strength, and is used for cell selection, handover decision, and network optimization. A higher RSRP value usually indicates a stronger signal coverage.

RSRQ (Reference Signal Received Quality) refers to a receiving quality of a reference signal. It combines RSRP and RSSI (Received Signal Strength Indicator) to assess a signal quality, and is used to determine a quality and an interference level of the signal. It plays an important role in cell reselection and a cell handover process, especially in high-interference environment.

SINR (Signal-to-Interference-plus-Noise Ratio) is a signal to interference plus noise ratio. It is an indicator for measuring the signal quality, represents a ratio of a desired signal power to a sum of interference and noise power, and is used to determine an actual communication quality of the network. A higher SINR value indicates a better signal quality and a higher data transmission rate.

RSSI (Received Signal Strength Indicator) is an indicator for a strength of the received signal. It represents all power received by the terminal, including a desired signal, interference and noise. It is used to determine a total signal strength, but because it includes the interference and noise, it cannot be used alone to determine the signal quality and is usually used in combination with other indicators.

With the development of technologies, when a terrestrial network coverage is insufficient or a terrestrial network is unavailable, a terminal device needs to perform a cell change in a mobile communication network to maintain communication continuity and communication service quality, thereby ensuring service stability and service continuity in various mobile scenarios. For example, in a C-V2X scenario supported by a cellular network (e.g., 3G, 4G, 5G networks) and a 5G NTN network, it can provide an extensive communication coverage and stable connections for terminals on land, marine, low-altitude, and space, which is crucial for realizing various application scenarios in high-level autonomous driving (e.g., advanced driving, remote driving, cooperative driving, environmental perception, and vehicle platooning). Therefore, it is necessary to ensure the network continuity in the C-V2X scenario to enhance the service quality.

In the prior art, during a process of the cell change, a network side determines an optimal cell at a current location of the terminal device based on historically registered cell information and pre-configured cell information (e.g., cell ID and signal quality) of the terminal device, generates and delivers a handover instruction for that cell to the terminal device. The terminal device performs the cell change upon receiving the handover instruction. However, the cell information on which the handover instruction delivered by the network side is based has a lag and is difficult to reflect the actual cell information, which easily reduces a network signal quality after the terminal device changes the cell, further reducing the service stability and the service continuity of the terminal device. Additionally, since the terminal device relies on the handover instruction from the network side for a cell handover, it is difficult for the terminal device to quickly and smoothly perform the cell handover when the network signal quality is poor, further reducing the service quality of the terminal device in various scenarios.

In the handover method provided by the present application, the terminal device performs a network registration based on a power-on instruction, and monitors a network condition of a current serving cell to obtain signal quality data of the current serving cell and a duration corresponding to the signal quality data of the current serving cell. When the signal quality data is lower than a first preset threshold and the duration corresponding to the signal quality data being lower than the first preset threshold exceeds a first preset time, an ephemeris calculation and an ephemeris estimation are performed based on current location information, current time information, and current ephemeris data to obtain a target overpassing satellite ID that will reach the terminal device earliest. Based on a real-time updated database cell table, the corresponding available satellite cell information is looked up in the database cell table according to the target overpassing satellite ID. At the same time, a corresponding public land mobile network identifier is determined from the database cell table based on the current location information, thereby further determining the corresponding available cellular cell information. An available cell list is constructed. The available cell list is generated based on the available satellite cell information, the available cellular cell information, and system information received in real time. The aforementioned real-time updated database cell table is obtained through dynamic updates based on system information delivered in real time by the network side, terminal sharing information, and OTA (Over-The-Air technology) information pushed by the cloud, thereby ensuring accuracy and comprehensiveness of the data. After obtaining the available cell list, signal quality of the cell(s) in the available cell list is measured based on a preset measurement strategy. It is determined whether a cell meets a preset communication condition based on the measured signal quality data and the measured duration of the cell, thereby determining a target cell based on a determination result. Thus, when the target cell is a cellular cell, the current network is switched to a cellular network corresponding to the cellular cell, and when the target cell is a satellite cell, the current network is switched to a non-terrestrial network corresponding to the satellite cell. In the present application, the dynamically updated database cell table provides a reliable basis for constructing the available cell list. Based on the obtained available cell list, an accurate and reliable cell change within cellular and non-terrestrial networks can be performed by the terminal device, thereby improving the stability and the continuity of the terminal device's network communication, and ensuring the service stability, the service continuity, and the service quality in various mobile scenarios.

The technical solution of the present application and how the technical solution of the present application solves the aforementioned technical problem will be described in detail below with specific embodiments. The following specific embodiments can be combined with each other, and for the same or similar concepts or processes, they may not be repeated in some embodiments. The embodiments of the present application will be described below with reference to the accompanying drawings.

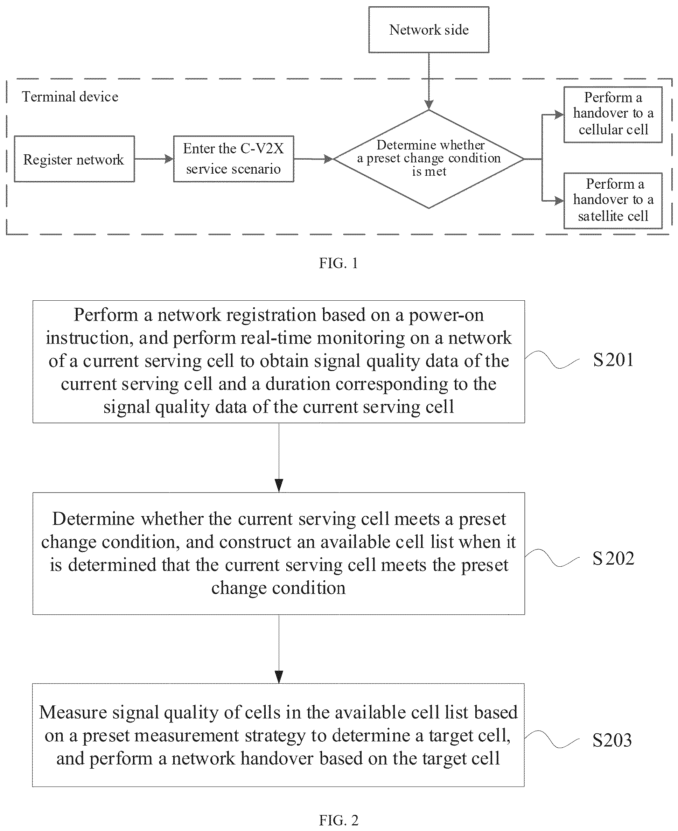

A specific application scenario of the present application includes a network side and a terminal side. The terminal side includes multiple terminal devices. For any terminal device, FIG. 1 is a schematic diagram of an application scenario of a network handover method provided by the present application. As shown in FIG. 1, the terminal device registers with a network of a current serving cell after power-on and, when entering the C-V2X service scenario, determines, based on data provided by the network side, whether the network of the current serving cell meets a preset change condition. When the preset change condition is met, the mobile communication network is switched from the current serving cell to a new cell, such as a cellular cell or a satellite cell. The terminal device in the present application can be a terrestrial mobile terminal or an aerial mobile terminal, which is not limited in the present application.

FIG. 2 is a first flowchart of a network handover method provided by the present application. As shown in FIG. 2, the method includes the following.

S201, perform a network registration based on a power-on instruction, and perform real-time monitoring on a network of a current serving cell to obtain signal quality data of the current serving cell and a duration corresponding to the signal quality data of the current serving cell.

More specifically, the network registration is performed based on a power-on instruction, and real-time monitoring is performed on the network of the current serving cell to obtain signal quality data of the current serving cell and a duration corresponding to the signal quality data of the current serving cell.

In a possible embodiment, the terminal device performs the network registration after power-on, and connects to a cellular network or a non-terrestrial network. When entering a service scenario (e.g., C-V2X service scenario), the terminal device monitors a signal quality of the current serving cell in real time to obtain the signal quality data of the current serving cell and the duration corresponding to the signal quality data of the current serving cell. Exemplarily, the signal quality data of the current serving cell includes RSRP data, RSRQ data, SINR data, and RSSI data.

Optionally, a master switch is introduced for the network handover method of the present application. A control strategy corresponding to the master switch can be adjusted via a control panel or by code-level macro definitions. In this embodiment, the control strategy of the master switch defaults to an ON state. For example, the terminal device, based on the power-on instruction, loads the control strategy corresponding to the master switch A during the power-on process, and starts a network handover process of this solution based on the control strategy of the default ON state.

S202, determine whether the current serving cell meets a preset change condition, and construct an available cell list when it is determined that the current serving cell meets the preset change condition.

More specifically, it is determined whether the current serving cell meets the preset change condition. When it is determined that the current serving cell meets the preset change condition, the available cell list is constructed. The preset change condition refers to that the signal quality data is lower than a first preset threshold and the duration corresponding to the signal quality data being lower than the first preset threshold exceeds a first preset time.

Optionally, after obtaining the RSRP data, the RSRQ data, the SINR data, and the RSSI data of the current serving cell, it is determined whether the current serving cell meets the preset change condition. That is, it is determined whether the RSRP data, the RSRQ data, the SINR data, and the RSSI data of the current serving cell are lower than a first preset threshold Threshold1, and whether the duration corresponding to the signal quality data being lower than the first preset threshold exceeds the first preset time.

Optionally, the first preset threshold Threshold1 includes poor threshold markers corresponding to RSRP, RSRQ, SINR, and RSSI respectively. The first preset threshold is obtained by configuring threshold markers corresponding to RSRP, RSRQ, SINR, and RSSI parameters when a network signal quality of a cell is poor.

Optionally, developers tune and set the first preset threshold based on a cell density, a coverage area, the number of cells, a cell priority (including an RAT priority), and an actual network measurement result of each area, so as to avoid power consumption and Ping-Pong handover issues caused by an overly high or low first preset threshold. The threshold markers of the first preset threshold are adjusted and configured via the control panel.

Exemplarily, since the service continuity is affected when the RSRP data is below -120dBm in the 4G network or below -130dBm in the 5G network, a threshold marker for the RSRP parameter in the first preset threshold Threshold1 of the current serving cell is set to -118dBm (4G) and -128dBm (5G). The method for determining the threshold markers for the RSRQ, SINR, and RSSI parameters in the first preset threshold is similar to that for the RSRP parameter in the first preset threshold, which is not elaborated in this embodiment. The setting of the first preset threshold Threshold1 can be a single indicator (RSRP) or a combined indicator [RSRP &&∥ RSRQ &&|| SINR &&|| RSSI].

Optionally, in this embodiment, a timer Time1 is used to determine a duration during which the signal quality data of the current serving cell is lower than a threshold marker of a corresponding parameter in the first preset threshold Threshold1.

Optionally, the terminal device constructs a database cell table and updates the database cell table in real time.

Optionally, constructing and updating the database cell table include: acquiring preset configuration information, and generating a database cell table according to the preset configuration information, where the preset configuration information includes historical registered cell information, cellular operation network information, and non-terrestrial operation network information; based on the registered network, receiving system information of the current serving cell delivered by the network side in real time to obtain serving cell information and neighbor cell information at a current moment; and updating the database cell table according to the serving cell information and the neighbor cell information.

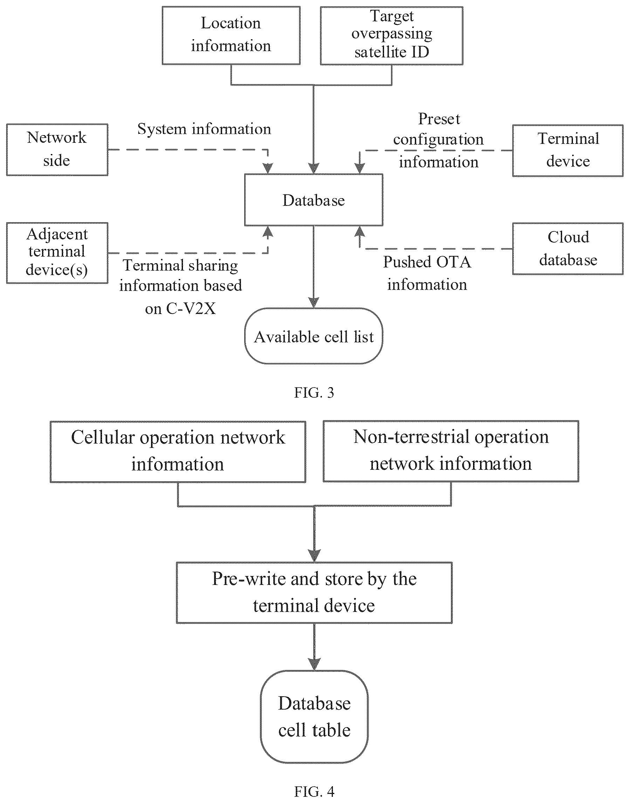

In a possible embodiment, as shown in FIG. 3, the terminal device writes the preset configuration information into a database. More specifically, as shown in FIG. 4, the terminal device obtains the preset configuration information based on the cellular operation network information (i.e., cellular network information) and the non-terrestrial operation network information (i.e., non-terrestrial network information) delivered in real time by the network side, pre-writes and saves the preset configuration information into the database, so as to obtain the database cell table. In the present application, a manner for storing the preset configured cellular operation network information and the preset configured non-terrestrial operation network information into the terminal device includes but is not limited to a database storage, an XML storage, and other storage manners, so as to adapt to resource limitations of different devices.

In a possible embodiment, the terminal device writes and saves the historical registered cell information, the cellular operation network information, and the non-terrestrial operation network information into the database, so as to obtain the constructed database cell table.

Exemplarily, in this embodiment, a cell belonging to the non-terrestrial network in the database cell table is marked as a satellite ID (or a corresponding TA area), and a cell belonging to the cellular network in the database cell table is marked as a PLMN (public land mobile network) identifier (or a corresponding TA area). The present application has no limitation on an identification field corresponding to each cell in the database cell table. Here, TA (Tracking Area) refers to a location area of LTE packet switched domain.

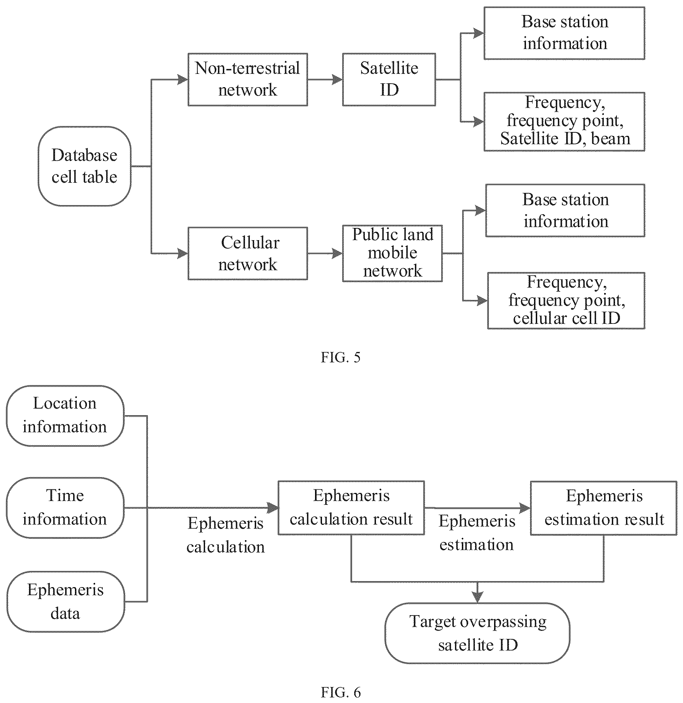

Exemplarily, FIG. 5 is a structural diagram of a database cell table provided by the present application. As shown in FIG. 5, the database cell table includes fields corresponding to the non-terrestrial network and the cellular network respectively. Among the fields for the non-terrestrial network, there is an identification field for a satellite ID, and the corresponding satellite cell information is determined based on the identification field for this satellite ID. At the same time, among the fields for the cellular network, there is an identification field for the public land mobile network, and the corresponding cellular cell information is determined based on the identification field of this public land mobile network. The satellite cell information includes but is not limited to a cell ID, a frequency point, base station information, a beam, a satellite ID, a satellite overpass time. The cellular cell information includes but is not limited to a cell ID, a frequency point, base station information.

In a possible embodiment, as shown in FIG. 3, after registering with the network, the terminal device receives a system message of the current serving cell delivered by the network side, obtains the latest serving cell information and the latest neighbor cell information at the current moment based on this system message, and updates the database cell table in the database with the latest serving cell information and the latest neighbor cell information.

Optionally, after generating the database cell table, the method further includes: if an instruction to enter the C-V2X service scenario is received, then terminal sharing information within a preset range is acquired based on the current location information. The terminal sharing information includes cell information shared by multiple adjacent terminal devices within the preset range. The database cell table is updated according to the terminal sharing information.

Exemplarily, as shown in FIG. 3, when receiving the instruction to enter the C-V2X service scenario, the terminal sharing information transmitted by multiple adjacent terminal devices within the preset range is acquired based on the current location information, and the database cell table in the database is updated with the terminal sharing information. The multiple adjacent terminal devices are terminal devices that support registration with the cellular network and the non-terrestrial network and have entered the C-V2X service scenario. The preset range is determined according to a communication distance and a communication quantity specified by the 3GPP protocol.

Optionally, after generating the database cell table, the method further includes: if OTA information pushed by a cloud database is received, then updating the database cell table based on the OTA information.

Exemplarily, as shown in FIG. 3, when receiving the OTA information pushed by the cloud database, the cell information that needs to be updated in the database cell table is determined and updated based on this OTA information.

Optionally, an available cell list is determined based on the updated database cell table. The number of available cell lists is configured by a developer according to an actual situation.

In this embodiment, the database cell table is generated and saved according to the preset configuration information, and is updated according to the system information delivered in real time by the network side and the terminal sharing information, so as to ensure the authenticity and the accuracy of the database cell table. The stored cell information is timely updated based on the information pushed by cloud data, further improving the comprehensiveness and the reliability of each cell information in the database of the terminal device.

Optionally, constructing the available cell list specifically includes: acquiring current location information, determining a public land mobile network identifier corresponding to the location information based on a database cell table that is updated in real time, determining corresponding available cellular cell information based on the public land mobile network identifier, where the database cell table is constructed and updated by the terminal device; determining a target overpassing satellite ID based on the location information, determining satellite cell information corresponding to the target overpassing satellite ID based on the database cell table to obtain available satellite cell information; and generating the available cell list according to the available cellular cell information and the available satellite cell information.

Optionally, before generating the available cell list, the method further includes: if real-time system information is received, then generating the available cell list according to the system information, the available cellular cell information, and the available satellite cell information.

In a possible embodiment, after the terminal device determines the available cellular cell information and the available satellite cell information based on the current database cell table, if the terminal device receives the system information delivered in real time by the network side, it generates the available cell list according to the system information, the available cellular cell information, and the available satellite cell information. In this embodiment, the available cell list is generated preferentially based on the valid system information when the database cell table is not updated in time, thereby improving the reliability and the accuracy of the available cell list.

Optionally, determining the target overpassing satellite ID based on the location information specifically includes: acquiring current time information and current ephemeris data; performing an ephemeris calculation on the location information, the time information, and the ephemeris data to obtain an ephemeris calculation result, and storing the ephemeris calculation result, where the location information includes altitude information, longitude information and latitude information, and the ephemeris calculation result includes a satellite ID and running trajectory data corresponding to each satellite; performing an ephemeris estimation on the ephemeris calculation result to obtain an ephemeris estimation result, and storing the ephemeris estimation result, where the ephemeris estimation result includes a satellite ID, an arrival time, and a departure time corresponding to each satellite; determining a surrounding satellite ID corresponding to the location information according to the running trajectory data corresponding to each satellite in the ephemeris calculation result; obtaining an arrival time and a departure time corresponding to the surrounding satellite ID based on the ephemeris estimation result, and determining the target overpassing satellite ID corresponding to the terminal device.

Exemplarily, the running trajectory data includes longitude information, latitude information, azimuth angle information, pitch angle information, time information, and orbit information during a real-time operation. The location information includes current longitude information, current latitude information, and current altitude information.

In a possible embodiment, FIG. 6 is a flowchart of calculating the target overpassing satellite ID provided by the present application. As shown in FIG. 6, current location information, current time information, and current ephemeris data of the terminal device are acquired, and the obtained ephemeris data is stored in an ephemeris data table of a database. Ephemeris calculation processing is performed on the location information, the time information, and the ephemeris data stored in the ephemeris data table through an ephemeris calculation algorithm to obtain an ephemeris calculation result, that is, a satellite ID and running trajectory data of each satellite. The ephemeris calculation result is stored in an ephemeris calculation table of the database. The ephemeris calculation algorithm in this embodiment is an open-source algorithm or an open-source model. By inputting the current time information, the current location information, and the current ephemeris data into a corresponding model, the ephemeris calculation result is obtained. The principle and technical effect of the ephemeris calculation in this embodiment are similar to those of the prior art and will not be repeated here.

In a possible embodiment, as shown in FIG. 6, after obtaining the ephemeris calculation result, ephemeris estimation processing is performed on data in the ephemeris calculation table through an ephemeris estimation algorithm, so as to obtain an ephemeris estimation result, that is, a satellite ID corresponding to each satellite, a corresponding arrival time at the terminal and a corresponding departure time from the terminal device for each satellite. The ephemeris estimation result is stored in an ephemeris estimation table of the database. The ephemeris estimation algorithm in this embodiment is recorded in the published technology and will not be repeated here.

In a possible embodiment, as shown in FIG. 6, a surrounding satellite ID around the current location of the terminal device is determined according to the satellite ID and the running trajectory data of each satellite in the ephemeris calculation table. An arrival time at the terminal device and a departure time from the terminal device for the surrounding satellite ID are determined according to the ephemeris estimation result in the ephemeris estimation table, and an overpass duration of the surrounding satellite ID is obtained. A fastest-overpass satellite ID for the terminal device is determined based on the arrival time and the overpass duration, and the target overpassing satellite ID corresponding to the terminal device is obtained.

Exemplarily, a manner for the terminal device to acquire the current location information includes but is not limited to: acquiring the current location information through a positioning satellite of a global navigation satellite system (GNSS) module in the terminal device, a non-terrestrial network base station and a map application software in the terminal device's operating system. The manner for the terminal device to acquire the current time information includes but is not limited to: acquiring the current time information through a cellular base station, a non-terrestrial network base station, or a mobile network on the network side. The manner for the terminal device to acquire the current ephemeris data includes but is not limited to: obtaining the current ephemeris data delivered by the network side through the non-terrestrial network or the mobile network.

In this embodiment, the ephemeris calculation processing and the ephemeris estimation processing are performed based on the current location information, the current time information, and the current ephemeris data by the terminal device, so as to obtain the target overpassing satellite ID with the fastest overpass. This solves a low-accuracy problem in the data used by the network side to generate the handover instruction, thereby further enhancing the service stability, the service continuity, and the service quality in various mobile scenarios.

In a possible embodiment, based on the structure of the database cell table shown in FIG. 5, after obtaining the database cell table, the current location information of the terminal device and the target overpassing satellite ID of the terminal device, a corresponding target identification field for public land mobile network is queried among the field(s) for cellular network in the database cell table according to the location information, and a corresponding cellular cell is determined based on the target identification field for public land mobile network to obtain available cellular cell information. At the same time, a corresponding target identification field for satellite ID is queried among the field(s) for non-terrestrial network (e.g., 5G non-terrestrial network) in the database cell table according to the target overpassing satellite ID, and a corresponding satellite cell is determined based on the target identification field for satellite ID to obtain available satellite cell information. The available cell list is generated according to the available satellite cell information and the available cellular cell information. In this embodiment, the corresponding cell is queried by the terminal device in the real-time updated database cell table based on the current location information and the target overpassing satellite ID, so as to generate the available cell list that includes both cellular cell(s) and satellite cell(s). This available cell list provides a basis for the cell change, thereby achieving fast and smooth switching within cellular and non-terrestrial networks, thus the network continuity and the transmission stability of the terminal device are improved.

Optionally, after generating the database cell table, the method further includes: updating the non-terrestrial operation network information in the database cell table according to the ephemeris calculation result and the ephemeris estimation result.

Exemplarily, the satellite cell information (e.g., the satellite ID, a range of beam coverage, an effective service time window, etc.) in the database is dynamically updated through the ephemeris calculation result and the ephemeris estimation result.

Optionally, after the database cell table is updated, the available cell list is synchronously updated based on the updated database cell table.

In this embodiment, the satellite cell information in the database is dynamically updated, and key parameters in the database, such as the satellite overpass time, the signal strength and the like are corrected in real time. This avoids relying on static or lagging satellite parameters, reduces a failure rate of signal switching of the terminal device, and improves the network continuity and the transmission stability of the terminal device.

S203, measure signal quality of cells in the available cell list based on a preset measurement strategy to determine a target cell, and perform a network handover based on the target cell.

More specifically, based on the preset measurement strategy, the signal quality of the cell(s) in the available cell list is measured to determine the target cell; and the network handover is performed based on the target cell. When the target cell is a cellular cell, the network is switched to a cellular network corresponding to the cellular cell, and when the target cell is a satellite cell, the network is switched to a non-terrestrial network corresponding to the satellite cell.

Optionally, the preset measurement strategy includes but is not limited to: a sequential measurement strategy and a full measurement strategy.

Optionally, if the preset measurement strategy is the sequential measurement strategy, a polling measurement is performed on the cells in the available cell list. Signal quality data of a cell and a duration corresponding to the signal quality data of that cell are obtained for each measurement, and it is determined whether the signal quality of the cell meets a preset communication condition. The preset communication condition refers to that the network signal quality data is higher than a second preset threshold and a duration during which the network signal quality data is higher than the second preset threshold exceeds a second preset time. A first cell whose signal quality meets the preset communication condition obtained through the polling measurement is determined as the target cell. If no cell in the available cell list has a signal quality that meets the preset communication condition through the polling measurement, the process continues by monitoring the signal quality of the current serving cell.

Optionally, if the preset measurement strategy is the full measurement strategy, a signal quality of each cell in the available cell list is measured to obtain signal quality data and a duration corresponding to each cell in the available cell list. It is determined whether the signal quality of a corresponding cell meets the preset communication condition according to the signal quality data and the duration of each cell. The cell(s) that meet the preset communication condition are sorted to obtain a sorting result, and the target cell is determined according to the sorting result.

Optionally, the preset measurement strategy can be determined by the user of the terminal device, or developers can configure corresponding measurement strategies for different scenarios, so that the user can choose a corresponding measurement strategy in a target scenario. For example, for a scenario with a high network requirement, the full measurement strategy is selected as the preset measurement strategy. For a scenario of emergency communication, the sequential measurement strategy is selected as the preset measurement strategy.

Optionally, after obtaining the target cell, the terminal device performs a cell change operation based on the target cell. The cell change operation includes but is not limited to a handover, a reselection, a redirection, an active network search, and a background network search.

In this embodiment, the sequential measurement strategy is adopted in the scenario of emergency communication, so as to perform the cell change corresponding to the cell immediately when the first cell that meets the preset communication condition is obtained based on the available cell list. In the scenario with the high network requirement, the full measurement strategy is adopted, so as to select the optimal cell for the cell change after obtaining the signal quality of each cell in the current available cell list. Thus, fast and smooth network switching is achieved across different scenarios, and the network continuity, the network stability, and the network reliability are improved.

Optionally, the second preset threshold Threshold2 includes good threshold markers corresponding to RSRP, RSRQ, SINR, and RSSI parameters, respectively. The second preset threshold is obtained by configuring threshold markers corresponding to RSRP, RSRQ, SINR, and RSSI parameters when a network signal quality of a cell is good.

Exemplarily, since the service continuity is not affected when RSRP data is above -90dBm in the 4G network or above -100dBm in the 5G network, a threshold marker for the RSRP parameter in the second preset threshold Threshold2 corresponding to the current serving cell is set to -90dBm (4G) and -100dBm (5G). The method for determining the threshold markers for the RSRQ, SINR, and RSSI parameters in the second preset threshold is similar to that for the RSRP parameter in the second preset threshold, which is not elaborated in this embodiment. The setting of the second preset threshold Threshold2 can be a single indicator (RSRP) or a combined indicator [RSRP &&|| RSRQ &&|| SINR &&|| RSSI].

Optionally, in this embodiment, a timer Time2 is used to determine a duration during which the signal quality data of the target cell is higher than a threshold marker of a corresponding parameter in the second preset threshold Threshold2.

Optionally, the configurations of the threshold markers respectively corresponding to the first preset threshold Threshold1, the second preset threshold Threshold2, the timer Time1, and the timer Time2 in the embodiments of the present application need to be adjusted and configured according to the network environment of the current cell. The configuration items of the above parameters vary in different areas and markets, and developers adjust and set the above parameters according to the specific network environment. The above parameters can be saved in a single configuration item or in multiple configuration items. In this embodiment, the above parameters are adjusted and configured via the control panel.

According to the handover method provided by the embodiments of the present application, the terminal device constructs the available cell list when determining that the signal quality data of the current serving cell is lower than the first preset threshold and the duration corresponding to the signal quality data being lower than the first preset threshold exceeds the first preset time. The signal quality of cell(s) in the available cell list is measured based on the preset measurement strategy, and the target cell is determined based on a measurement result. Thus, when the target cell is a cellular cell, the current network is switched to a cellular network corresponding to the cellular cell. When the target cell is a satellite cell, the current network is switched to a non-terrestrial network corresponding to the satellite cell. This achieves fast and smooth switching of the terminal device within cellular and non-terrestrial networks, improves the stability and the continuity of the terminal device's network communication, and reduces the impact of the cell change process on user experience.

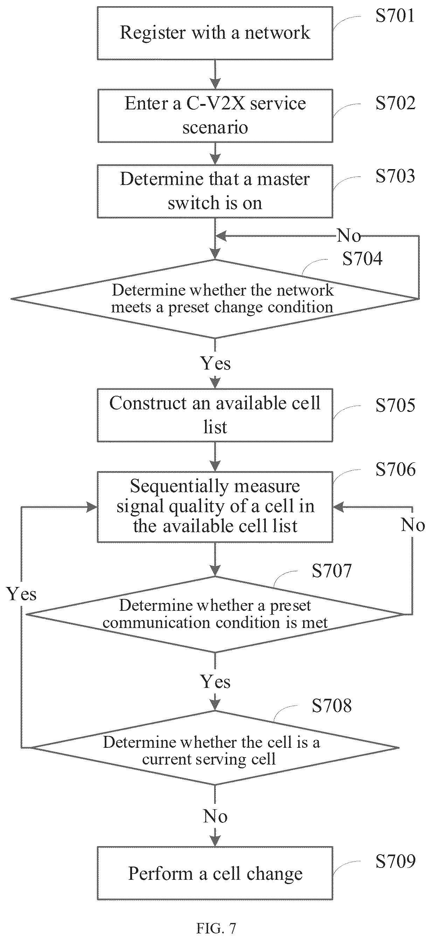

FIG. 7 is a second flowchart of the network handover method provided by the present application. As shown in FIG. 7, based on the embodiment of FIG. 2, this embodiment provides a detailed description of a network handover method when a preset measurement strategy is a sequential measurement strategy. The method includes the following.

S701, register with a network.

More specifically, a terminal device registers with a network of a current serving cell after power-on.

S702, enter a C-V2X service scenario.

More specifically, the terminal device enters the C-V2X service scenario based on an instruction to enter the C-V2X service scenario.

S703, determine that a master switch is on.

More specifically, the terminal device determines that the control master switch corresponding to this solution is in an ON state. A state of the master switch defaults to the ON state.

S704, determine whether the network meets a preset change condition.

More specifically, the network of the current serving cell is monitored in real time to obtain signal quality data and a duration of the network of the current serving cell. It is determined that the network meets the preset change condition when the signal quality data is lower than a first preset threshold and the duration exceeds a first preset time; otherwise, it is determined that the network does not meet the preset change condition.

Optionally, when it is determined that the preset change condition is met, execute step S705.

Optionally, when it is determined that the preset change condition is not met, execute step S704. The process continues by monitoring the network in real time.

S705, when the preset change condition is met, construct an available cell list.

More specifically, when it is determined that the preset change condition is met, current location information, current time information, and current ephemeris data are acquired and processed through an ephemeris calculation algorithm to obtain a satellite ID and running trajectory data corresponding to each satellite. Ephemeris estimation processing is performed on each satellite through an ephemeris estimation algorithm to obtain a satellite ID, an arrival time at the terminal device, and a departure time from the terminal device for each satellite. An overpass duration of each satellite is determined based on the arrival time at the terminal device and the departure time from the terminal device for each satellite. A target overpassing satellite ID that will reach the terminal device earliest is determined based on the current location information of the terminal device, the arrival time at the terminal device for each satellite and the overpass duration of each satellite. The corresponding available satellite cell information is queried in the database cell table according to the target overpassing satellite ID, and the corresponding available cellular cell information is queried in the database cell table according to the location information, thereby obtaining the available cell list.

S706, sequentially measure signal quality of a cell in the available cell list.

More specifically, based on the sequential measurement strategy, a polling measurement is performed on signal quality of cell(s) in the available cell list. For example, a signal quality of a first cell in the available cell list is measured, and after obtaining signal quality data and a duration corresponding to the first cell, step S707 is executed.

S707, determine whether the cell meets a preset communication condition.

More specifically, based on the signal quality of the first cell obtained in step S706, when it is determined that the signal quality data of the first cell is higher than a second preset threshold and the duration exceeds a second preset time, it is determined that the cell meets the preset communication condition and step S708 is executed. Otherwise, it is determined that the cell does not meet the preset communication condition, and at this time step S706 is executed, in which the polling measurement is performed to measure a signal quality of a next cell (a second cell) in the available cell list, until a cell that meets the preset communication condition is obtained.

Optionally, if no cell that meets the preset communication condition is obtained after polling the entire available cell list, the process continues by monitoring the network of the current serving cell.

S708, when the cell meets the preset communication condition, determine whether the cell is the current serving cell.

More specifically, when it is determined in step S707 that the first cell meets the preset communication condition, it is determined whether the first cell is the current serving cell.

S709, when it is not the current registered cell, perform a cell change.

More specifically, when it is determined that it is not the current serving cell, the cell change is performed according to cell information corresponding to the first cell.

Optionally, if the current serving cell is cellular cell 1 and the first cell is cellular cell 2, a change between different cellular cells is performed.

Optionally, if the current serving cell is cellular cell 1 and the first cell is satellite cell 1, a change between a cellular cell and a satellite cell is performed.

Optionally, if the current serving cell is satellite cell 1 and the first cell is satellite cell 2, a change between different satellite cells is performed.

In the network handover method provided by the embodiment of the present application, based on the sequential measurement strategy, the measurement stops when a cell that meets the preset communication condition is obtained by polling the available cell list, and the cell change is performed according to that cell. This meets the cell change requirement in the scenario of emergency communication, improves a cell change rate, and enhances the service continuity and the service stability.

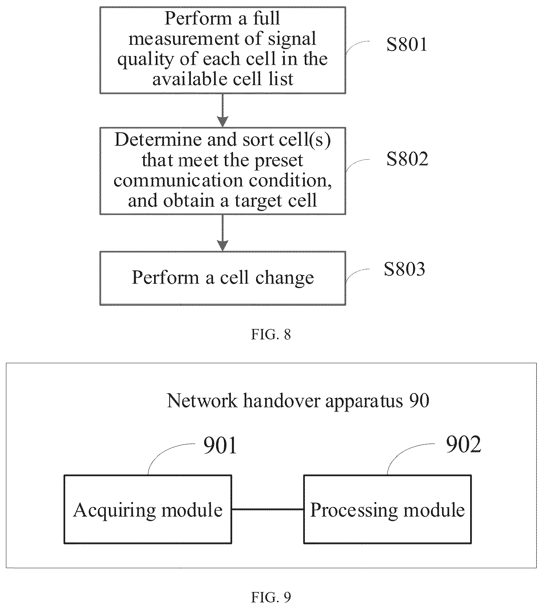

FIG. 8 is a third flowchart of the network handover method provided by the present application. As shown in FIG. 8, based on the embodiment of FIG. 7, this embodiment provides a detailed description of a network handover method after constructing the available cell list based on a full measurement strategy. The method includes the following.

S801, perform a full measurement of signal quality of each cell in the available cell list.

More specifically, after constructing the available cell list, the terminal device performs a full measurement of the signal quality of each cell in the available cell list based on the full measurement strategy, thereby obtaining signal quality data and a duration corresponding to each cell in the available cell list.

S802, determine and sort cell(s) that meet the preset communication condition, and obtain a target cell.

More specifically, it is determined whether a respective cell meets the preset communication condition. Multiple cells whose signal quality data are higher than a second preset threshold and whose durations exceed a second preset time are sorted. A cell ranked first is taken as the target cell.

Optionally, after obtaining the multiple cells whose signal quality data are higher than the second preset threshold and whose durations exceed the second preset time, the multiple cells are sorted according to their signal quality data and the durations of the cells.

S803, perform a cell change.

More specifically, when it is determined that the target cell is not the current serving cell of the terminal device, the current serving cell is handed over to the target cell.

In the network handover method provided by the embodiment of the present application, based on the full measurement strategy, one or more cells that meet the preset communication condition are obtained after a full measurement of the available cell list. These cells are sorted to obtain a cell with the optimal network, and then the cell change is performed based on this cell. This meets the cell change requirement in the scenarios with high network requirements and enhances user experience.

FIG. 9 is a structural diagram of a network handover apparatus provided by the present application, where the apparatus is applied to a terminal device. As shown in FIG. 9, the network handover apparatus 90 provided in this embodiment includes:
an acquiring module 901, configured to perform a network registration based on a power-on instruction, and perform real-time monitoring on a network of a current serving cell to obtain signal quality data of the current serving cell and a duration corresponding to the signal quality data of the current serving cell;
a processing module 902, configured to determine whether the current serving cell meets a preset change condition, construct an available cell list when the current serving cell meets the preset change condition, where the preset change condition refers to that the signal quality data is lower than a first preset threshold and the duration corresponding to the signal quality data being lower than the first preset threshold exceeds a first preset time;
the processing module 902 is further configured to measure signal quality of cell(s) in the available cell list based on a preset measurement strategy to determine a target cell; perform the network handover based on the target cell, where when the target cell is a cellular cell, the network is switched to a cellular network corresponding to the cellular cell, and when the target cell is a satellite cell, the network is switched to a non-terrestrial network corresponding to the satellite cell.

Optionally, the processing module 902 is further configured to: acquire current location information, determine a public land mobile network identifier corresponding to the location information based on a database cell table that is updated in real time, and determine corresponding available cellular cell information based on the public land mobile network identifier, where the database cell table is constructed and updated by the terminal device;
determine a target overpassing satellite identification (ID) based on the location information, and determine satellite cell information corresponding to the target overpassing satellite ID based on the database cell table to obtain available satellite cell information;
generate the available cell list according to the available cellular cell information and the available satellite cell information.

Optionally, the processing module 902 is further configured to, before generating the available cell list, if real-time system information is received, generate the available cell list according to the system information, the available cellular cell information, and the available satellite cell information.

Optionally, the processing module 902 is further configured to: acquire preset configuration information, and generate the database cell table according to the preset configuration information, where the preset configuration information includes historical registered cell information, cellular operation network information, and non-terrestrial operation network information;
based on the registered network, receive system information of the current serving cell delivered by a network side in real time to obtain serving cell information and neighbor cell information at a current moment;
update the database cell table according to the serving cell information and the neighbor cell information.

Optionally, the processing module 902 is further configured to, after generating the database cell table, if an instruction to enter a C-V2X service scenario is received, acquire terminal sharing information within a preset range based on the current location information, where the terminal sharing information includes cell information shared by a plurality of adjacent terminal devices within the preset range; and
update the database cell table according to the terminal sharing information.

Optionally, the processing module 902 is further configured to, after generating the database cell table, if OTA information pushed by a cloud database is received, update the database cell table based on the OTA information.

Optionally, the processing module 902 is further configured to: acquire current time information and current ephemeris data; perform an ephemeris calculation on the location information, the time information, and the ephemeris data to obtain an ephemeris calculation result and store the ephemeris calculation result, where the location information includes altitude information, longitude information and latitude information, and the ephemeris calculation result includes a satellite ID and running trajectory data corresponding to each satellite;
perform an ephemeris estimation on the ephemeris calculation result to obtain an ephemeris estimation result and store the ephemeris estimation result, where the ephemeris estimation result includes a satellite ID, an arrival time, and a departure time corresponding to each satellite;
determine a surrounding satellite ID corresponding to the location information according to the running trajectory data corresponding to each satellite in the ephemeris calculation result; obtain an arrival time and a departure time corresponding to the surrounding satellite ID based on the ephemeris estimation result, and determine the target overpassing satellite ID corresponding to the terminal device.

Optionally, the processing module 902 is further configured to, after generating the database cell table, update the non-terrestrial operation network information in the database cell table according to the ephemeris calculation result and the ephemeris estimation result.

Optionally, the processing module 902 is further configured to, when the preset measurement strategy is a sequential measurement strategy, perform a polling measurement on cell(s) in the available cell list; obtain signal quality data of a cell and a duration corresponding to the signal quality data of the cell for each measurement, and determine whether a signal quality of the cell meets a preset communication condition, where the preset communication condition refers to that the signal quality data is higher than a second preset threshold and the duration corresponding to the signal quality data being higher than the second preset threshold exceeds a second preset time;
determine a first cell whose signal quality meets the preset communication condition obtained through the polling measurement as the target cell;
if no cell in the available cell list has a signal quality that meets the preset communication condition through the polling measurement, continue to monitor the signal quality of the current serving cell.

Optionally, the processing module 902 is further configured to, when the preset measurement strategy is a full measurement strategy, measure a signal quality of each cell in the available cell list to obtain signal quality data and a duration corresponding to each cell in the available cell list;
determine whether a signal quality of a corresponding cell meets a preset communication condition according to the signal quality data and the duration corresponding to each cell, and sort cell(s) that meet the preset communication condition to obtain a sorting result; and determine the target cell according to the sorting result.

The network handover apparatus provided in the embodiment can execute the method performed by the terminal in the above method embodiments. The implementation principle and technical effects thereof are similar, which will not be repeated here.

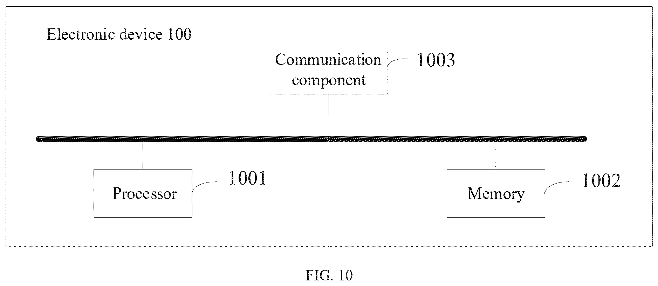

FIG. 10 is a structural diagram of an electronic device provided by the present application. As shown in FIG. 10, the terminal 100 provided in this embodiment includes at least one processor 1001 and a memory 1002. Optionally, the device 100 further includes a communication component 1003. The processor 1001, the memory 1002, and the communication component 1003 are connected via a bus 1004.

In a specific implementation process, the at least one processor 1001 executes computer-executable instructions stored in the memory 1002, causing the at least one processor 1001 to execute the above method.

For the specific implementation process of the processor 1001, reference may be made to the method executed by the terminal in the above method embodiments. The implementation principle and technical effects thereof are similar, which will not be repeated here.

In the above embodiments, it should be understood that, the processor can be a central processing unit (CPU), or other general-purpose processors, a digital signal processor (DSP), an application specific integrated circuit (ASIC), etc. The general-purpose processor can be a microprocessor, or the processor can also be any conventional processor, etc. The steps of the method disclosed in combination with the present application can be directly embodied as being executed and completed by a hardware processor, or executed and completed by a combination of hardware and software modules in the processor.

The memory may include a high-speed random access memory (RAM), and may also include a non-volatile memory (NVM), such as at least one disk memory.

The bus can be an industry standard architecture (ISA) bus, a peripheral component interconnect (PCI) bus, an extended industry standard architecture (EISA) bus, etc. The bus can be divided into an address bus, a data bus, a control bus, etc. For ease of representation, the bus in the drawings of the present application is not limited to only one bus or one type of bus.

The present application also provides a computer program product, including a computer program. When the computer program is executed by a processor, any of the above methods is implemented.

The present application also provides a computer-readable storage medium, having computer-executable instructions stored therein. When the computer-executable instructions are executed by a processor, any of the above methods is implemented.

The above readable storage medium can be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk. The readable storage medium can be any available medium that can be accessed by a general-purpose computer or a special-purpose computer.

An exemplary readable storage medium is coupled to the processor, enabling the processor to read information from the readable storage medium and write information to the readable storage medium. Of course, the readable storage medium can also be an integral part of the processor. The processor and the readable storage medium can be located in an application specific integrated circuit (ASIC). Of course, the processor and the readable storage medium can also exist as discrete components in the device.

The division of units is only a logical function division. In an actual implementation, there may be other division manners. For example, multiple units or multiple components may be combined or integrated into another system, or some features may be ignored or not executed. In addition, the mutual coupling or direct coupling or communication connection shown or discussed may be through some interfaces, indirect coupling or communication connection of apparatuses or units, which may be electrical, mechanical, or other forms.

The units described as separate components may or may not be physically separated. The components displayed as units may or may not be physical units, that is, they may be located in one place or distributed across multiple network units. Some or all of the units may be selected according to actual needs to achieve the purpose of the solution of the embodiments.

In addition, various functional units in various embodiments of the present application can be integrated into one processing unit, or each separate unit exist physically, or two or more units can be integrated into one unit.

If a function is implemented in a form of a software functional unit and sold or used as an independent product, it can be stored in a computer-readable storage medium. Based on this understanding, the technical solution of the present application essentially or the part contributing to the prior art or the part of the technical solution can be embodied in the form of a software product. The computer software product is stored in a storage medium and includes several instructions to enable a computer device (which may be a personal computer, a server, or a network device, etc.) to execute all or part of the steps of the methods described in the various embodiments of the present application. The aforementioned storage medium includes various media that can store program codes, such as a USB disk, a mobile hard disk, a read-only memory (ROM), a random access memory (RAM), a magnetic disk, or an optical disk, etc.

Those of ordinary skill in the art can understand that, all or part of the steps of the above method embodiments can be completed by hardware related to program instructions. The aforementioned program can be stored in a computer-readable storage medium. When being executed, the program executes the steps of the above method embodiments. The aforementioned storage medium includes various media that can store program codes, such as a ROM, a RAM, a magnetic disk, or an optical disk, etc.

Finally, it should be noted that, those skilled in the art will readily think of other implementations of the present application after considering the specification and practicing the application disclosed herein. The present application is intended to cover any variations, uses, or adaptive changes of the present application. These variations, uses, or adaptive changes follow the general principles of the present application and include common knowledge or customary technical means in the technical field not disclosed in the present application. It is not limited to the precise structure that has been described above and shown in the drawings, and can make various modifications and changes without departing from the scope. The scope of the present application is only limited by the appended claims.

## Claims

1. A network handover method, applied to a terminal device, comprising:
performing (S20 1) a network registration based on a power-on instruction, and performing (S201) real-time monitoring on a network of a current serving cell to obtain signal quality data of the current serving cell and a duration corresponding to the signal quality data of the current serving cell;
determining (S202) whether the current serving cell meets a preset change condition, and constructing (S202) an available cell list when determining that the current serving cell meets the preset change condition, wherein the preset change condition refers to that the signal quality data is lower than a first preset threshold and the duration corresponding to the signal quality data being lower than the first preset threshold exceeds a first preset time;
measuring (S203), based on a preset measurement strategy, a signal quality of a cell in the available cell list to determine a target cell; and performing (S203) a network handover based on the target cell, wherein when the target cell is a cellular cell, the network is switched to a cellular network corresponding to the cellular cell, and when the target cell is a satellite cell, the network is switched to a non-terrestrial network corresponding to the satellite cell;
wherein the constructing the available cell list specifically comprises:
acquiring current location information, determining a public land mobile network identifier corresponding to the location information based on a database cell table that is updated in real time, and determining corresponding available cellular cell information based on the public land mobile network identifier, wherein the database cell table is constructed by the terminal device, and is dynamically updated according to system information delivered in real time by a network side, terminal sharing information, and over-the-air technology, OTA, information pushed by a cloud;
determining a target overpassing satellite identification, ID, based on the location information, and determining satellite cell information corresponding to the target overpassing satellite ID based on the database cell table to obtain available satellite cell information;
generating the available cell list according to the available cellular cell information and the available satellite cell information.

2. The method according to claim 1, wherein before generating the available cell list, the method further comprises:
when real-time system information is received, generating the available cell list according to the system information, the available cellular cell information, and the available satellite cell information.

3. The method according to claim 1, wherein the construction and update of the database cell table comprises:
acquiring preset configuration information, and generating the database cell table according to the preset configuration information, wherein the preset configuration information comprises historical registered cell information, cellular operation network information, and non-terrestrial operation network information;
based on the registered network, receiving system information of the current serving cell delivered by a network side in real time to obtain serving cell information and neighbor cell information at a current moment; and updating the database cell table according to the serving cell information and the neighbor cell information.

4. The method according to claim 3, wherein after generating the database cell table, the method further comprises:
when an instruction to enter a C-V2X service scenario is received, acquiring terminal sharing information within a preset range based on the current location information, wherein the terminal sharing information comprises cell information shared by a plurality of adjacent terminal devices within the preset range;
updating the database cell table according to the terminal sharing information.

5. The method according to claim 3, wherein after generating the database cell table, the method further comprises:
when over-the-air technology, OTA, information pushed by a cloud database is received, updating the database cell table based on the OTA information.

6. The method according to claim 1, wherein the determining the target overpassing satellite ID based on the location information specifically comprises:
acquiring current time information and current ephemeris data; performing an ephemeris calculation on the location information, the time information, and the ephemeris data to obtain an ephemeris calculation result and storing the ephemeris calculation result, wherein the location information comprises altitude information, longitude information and latitude information, and the ephemeris calculation result comprises a satellite ID and running trajectory data corresponding to each satellite;
performing an ephemeris estimation on the ephemeris calculation result to obtain an ephemeris estimation result and storing the ephemeris estimation result, wherein the ephemeris estimation result comprises a satellite ID, an arrival time, and a departure time corresponding to each satellite;
determining a surrounding satellite ID corresponding to the location information according to the running trajectory data corresponding to each satellite in the ephemeris calculation result; obtaining an arrival time and a departure time corresponding to the surrounding satellite ID based on the ephemeris estimation result, and determining the target overpassing satellite ID corresponding to the terminal device.

7. The method according to claim 6, wherein after generating the database cell table, the method further comprises:
updating the non-terrestrial operation network information in the database cell table according to the ephemeris calculation result and the ephemeris estimation result.

8. The method according to claim 1, further comprising:
when the preset measurement strategy is a sequential measurement strategy, performing a polling measurement on a cell in the available cell list; obtaining signal quality data of a cell and a duration corresponding to the signal quality data of the cell for each measurement, and determining whether a signal quality of the cell meets a preset communication condition, wherein the preset communication condition refers to that the signal quality data is higher than a second preset threshold and the duration corresponding to the signal quality data being higher than the second preset threshold exceeds a second preset time;
determining a first cell whose signal quality meets the preset communication condition obtained through the polling measurement as the target cell;
when no cell in the available cell list has a signal quality that meets the preset communication condition through the polling measurement, continuing to monitor the signal quality data of the current serving cell.

9. The method according to claim 1, further comprising:
when the preset measurement strategy is a full measurement strategy, measuring a signal quality of each cell in the available cell list to obtain signal quality data and a duration corresponding to each cell in the available cell list;
determining whether a signal quality of a corresponding cell meets a preset communication condition according to the signal quality data and the duration corresponding to each cell, and sorting cells that meet the preset communication condition to obtain a sorting result; and determining the target cell according to the sorting result.

10. A network handover apparatus (90), applied to a terminal device, comprising:
an acquiring module (901), configured to perform a network registration based on a power-on instruction, and perform real-time monitoring on a network of a current serving cell to obtain signal quality data of the current serving cell and a duration corresponding to the signal quality data of the current serving cell;
a processing module (902), configured to determine whether the current serving cell meets a preset change condition, and construct an available cell list when determining that the current serving cell meets the preset change condition, wherein the preset change condition refers to that the signal quality data is lower than a first preset threshold and the duration corresponding to the signal quality data being lower than the first preset threshold exceeds a first preset time;
the processing module (902) is further configured to measure, based on a preset measurement strategy, a signal quality of a cell in the available cell list to determine a target cell; and perform a network handover based on the target cell, wherein when the target cell is a cellular cell, the network is switched to a cellular network corresponding to the cellular cell, and when the target cell is a satellite cell, the network is switched to a non-terrestrial network corresponding to the satellite cell; wherein constructing the available cell list specifically comprises:
acquiring current location information, determining a public land mobile network identifier corresponding to the location information based on a database cell table that is updated in real time, and determining corresponding available cellular cell information based on the public land mobile network identifier, wherein the database cell table is constructed by the terminal device, and is dynamically updated according to system information delivered in real time by a network side, terminal sharing information, and over-the-air technology, OTA, information pushed by a cloud;
determining a target overpassing satellite identification, ID, based on the location information, and determining satellite cell information corresponding to the target overpassing satellite ID based on the database cell table to obtain available satellite cell information;
generating the available cell list according to the available cellular cell information and the available satellite cell information.

11. An electronic device (100), comprising: a memory (1002) and a processor (1001);
the memory (1002) is stored with computer-executable instructions;
the processor (1001) executes the computer-executable instructions stored in the memory (1002), and the processor (1001) is caused to execute the method according to any one of claims 1 to 9.

12. A computer-readable storage medium, wherein the computer-readable storage medium is stored with computer-executable instructions, and the computer-executable instructions, when executed by a processor, are used to implement the method according to any one of claims 1 to 9.

13. A computer program product, comprising a computer program, and when the computer program is executed by a processor, the method according to any one of claims 1 to 9 is implemented.
